Europäisches Patentamt

European Patent Office

Office européen des brevets

(19)

(11) Publication number: **0 297 908 B1**

# EUROPEAN PATENT SPECIFICATION

(12)

(45) Date of publication of patent specification: **30.09.92**    (51) Int. Cl.⁵: **C04B 35/49**, A61C 7/00

(21) Application number: **88306031.1**

(22) Date of filing: **01.07.88**

(54) **Ceramic orthodontic bracket and process for its manufacture.**

(30) Priority: **02.07.87 JP 163907/87**
          **02.06.88 JP 134483/88**

(43) Date of publication of application:
      **04.01.89 Bulletin 89/01**

(45) Publication of the grant of the patent:
      **30.09.92 Bulletin 92/40**

(84) Designated Contracting States:
      **CH DE FR GB IT LI NL**

(56) References cited:
      **EP-A- 0 177 062**
      **EP-A- 0 206 780**
      **DE-A- 2 945 020**

(73) Proprietor: **Tosoh Corporation**
      **4560, Kaisei-cho**
      **Shinnanyo-shi, Yamaguchi-ken(JP)**

(72) Inventor: **Tsukuma, Koji**
      **1755 Okada**
      **Atsugi-shi Kanagawa(JP)**
      Inventor: **Oda, Seiji**
      **328-1, Kurokawa Asao-ku**
      **Kawasaki-shi Kanagawa(JP)**
      Inventor: **Haga, Hirotoshi**
      **1691-102 Nakanoshima Tama-ku**
      **Kawasaki-shi Kanagawa(JP)**

(74) Representative: **Sheard, Andrew Gregory et al**
      **Kilburn & Strode 30, John Street**
      **London WC1N 2DD(GB)**

# Description

The present invention relates to a ceramic orthodontic bracket having good transparency and an unobtrusive colour, and a process for its manufacture.

In the past, stainless steel and plastics materials such as poly-carbonates have been used as materials for orthodontic brackets. Furthermore, alumina ceramic materials have been used recently.

Stainless steel has a excellent strength and mechinability, but since it has metallic lustre, when a stainless steel orthodontic bracket is attached to a row of teeth, the bracket stands out conspicuously and spoils the appearance of the patient. From the viewpoint of eliminating this defect of marring the appearance, a transparent plastics bracket is sometimes used. However, a plastics bracket exhibits a problem in that the slip between the bracket and an orthodontic wire is poor and so a satisfactory orthodontic effect cannot be attained. An alumina ceramic bracket has excellent rigidity and a good slip between the bracket and the wire, but since its transparency is poor, when the bracket is set in the mouth problems with appearance arise once again.

It is an object of the present invention to eliminate these defects and to provide a transparent ceramic bracket which has excellent strength and an unobtrusive colour, has a good slip with metal and exerts a satisfactory orthodontic effect.

According to the present invention, there is provided a ceramic orthodontic bracket composed of a sintered body consisting essentially of 2 to 15 mol % of yttrium oxide ($Y_2O_3$), and 5 to 20 mol % of titanium dioxide ($TiO_2$), the balance being zirconia ($ZrO_2$).

In general, ceramics are opaque because of a scattering of light due to the presence of voids, grain boundaries and impurities. If these causes of scattering are drastically reduced, a transparency can be imparted to ceramics. The ceramics used in the present invention are a solid solution of yttria (a stabiliser) - and titania-doped zirconia. The addition of titania enables a high transparency to be imparted to zirconia ceramics, as disclosed in Japanese Patent Application No.60-132,971 (Japanese Unexamined Patent Publication No.62-91,467).

The highest light-transmitting properties may be attained in a composition comprising 6 to 8 mole % of $Y_2O_3$ and 10 to 15 mole % of $TiO_2$, with the balance being $ZrO_2$. This ceramic has a fluorite type structure. The grain diameter of the sintered body is usually in the range of from 10 to 200 $\mu$m.

Preferably, the starting material is a fine powder having a high purity. For example, the fine powder which is obtained by adding hydrated titania formed by hydrolysing a titanium alkoxide to a powder of $ZrO_2$-$Y_2O_3$ system having a grain diameter not larger than 0.3 $\mu$m, and passing the mixture through blending, drying, sintering and pulverising steps, is preferably used as the starting material. The powder may be moulded and the moulded body sintered at a temperature of at least 1,300°C preferably in an oxygen-containing atmosphere.

According to the invention, therefore, there is provided a process for making a ceramic orthodontic bracket, characterised by the steps of moulding finely divided particles of a mixture composed of 2 to 15 mol% yttrium oxide ($Y_2O_3$), 5 to 20 mol% titanium dioxide ($TiO_2$) and the balance of zirconia ($ZrO_2$) and then sintering the moulded body at a temperature of at least 1,300°C in an oxygen-containing atmosphere.

In order to attain a sufficient grain growth, sintering is preferably conducted, e.g. at 1,600 to 1,800°C for perhaps about 1 to 3 hours, preferably about 2 hours. To obtain transparency, the sintered body is preferably subjected to the hot isostatic pressing at a temperature of 1,400 to 1,700°C in an inert gas atmosphere.

The hot isostatic pressing may be carried out at about 900 to 1600kgf/cm$^2$ (88.3 to 156.9 MPa). However, if the hot isostatic pressing is conducted, the sintered body is reduced and blackened, and accordingly, the original colour must be restored by oxidising the sintered body at a temperature of 800 to 1,200°C in air or oxygen.

A good transparency and a high mechanical strength are required for a bracket material. The light transmission of the transparent zirconia sintered body does not substantially depend on the grain size. The light transmission of the transparent zirconia sintered body is 54 to 67% in the case of a grain diameter of 20um and 59 to 68% in the case of a grain diameter of 200um at a sample thickness of 1mm. In contrast, the strength depends greatly on the particle size and is about 30kgf/mm$^2$ (294MPa) in the case of a grain diameter of 20$\mu$m and about 20kgf/mm$^2$ (196Mpa) in the case of a grain diameter of 200$\mu$m (expressed in the terms of the three-point bending strength).

Accordingly, an optimum grain diameter of the sintered body as the bracket material appears to be in the vicinity of 20$\mu$m, e.g. 15 to 25$\mu$m.

The orthodontic bracket may be prepared by machining a sintered body or by forming a moulded body having a bracket shape by injection moulding or slip casting, removing the binder, sintering the moulded body to obtain a sintered body having a bracket shape, and polishing the surface of the sintered body.

The colour of the bracket material is important for the appearance because the bracket is attached in the mouth. Transparent zirconia usually has a very thin light yellow colour resembling the colour of teeth. The yellowish tint can be reduced by decreasing the content of iron as an impurity, to several ppm from between 20 and 100ppm, or more.

The transparent zirconia bracket of the present invention has an excellent rigidity and has a good slip to a metal wire, and therefore, a satisfactory orthodontic effect can be obtained. Moreover, the bracket of the present invention has a transparency and a colour resembling the colour of natural teeth, and thus is unobtrusive. Therefore, the mental state of a patient can be remarkably alleviated. Of course, the bracket is not corroded by saliva and is harmless to the human body.

The invention may be carried into practice in various ways and some embodiments will now be described by way of example with reference to the accompanying drawings in which:

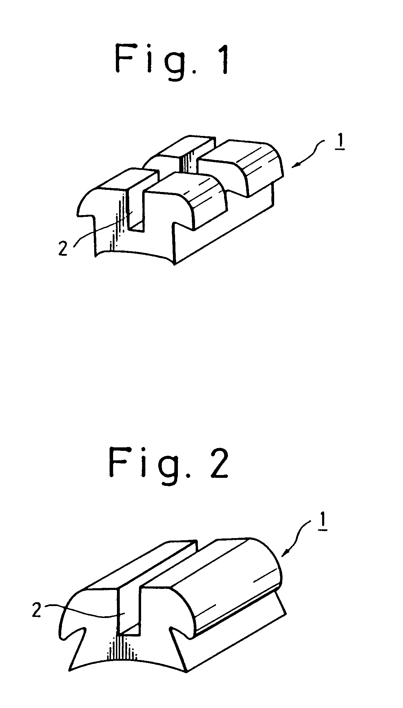

Figures 1 and 2 are perspective views of two embodiments of orthodontic brackets according to the present invention;

Figure 1 shows an orthodontic bracket 1. The bracket includes a longitudinal channel 2 arranged to receive the orthodontic wire (not shown) and also a transverse channel 3. The bracket 1 in Figure 2 is generally similar except that the transverse channel 3 is absent. In addition, the overall shape of the body of the bracket differs slightly.

The brackets 1 shown in the drawings may by obtained as described in the following non-limiting examples.

EXAMPLE 1

A fine powder of the $TiO_2$-$Y_2O_3$-$ZrO_2$ system [$Y_2O_3/ZrO_2$ = 8/92 by mole, $TiO_2/(ZrO_2 + Y_2O_3)$ = 10/90 by mole] was moulded at 1,000 kgf/cm$^2$ (98.1MPa) into a plate, and the moulded plate was sintered at 2,400°C for 2 hours under a circulation of oxygen. The sintered body was subjected to a hot isostatic pressing at 1,500°C and 1,000kgf/cm$^2$ (98.1Mpa) for 30 minutes in argon. The treated body was charged in an electric furnace and heated at 1,000°C to obtain a plate-shaped sintered body. The sintered body was processed into the shape of a bracket by an ultrasonic machining technique, and then subjected to a barrel polishing treatment to obtain a transparent zirconia orthodontic bracket.

The appearance of the bracket obtained is shown in Figure 1. The groove 2 extending in the longitudinal direction in the bracket 1, shown in the drawings is a groove for passing an orthodontic wire.

EXAMPLE 2

To 100g of a fine powder of the $TiO_2$-$Y_2O_3$-$ZrO_2$ system [$Y_2O_3/ZrO_2$ = 8/92 by mole, $TiO_2/(ZrO_2 + Y_2O_3)$ = 10/90 by mole] were added 1.2g of a polycarboxylic acid type dispersent, 1.2g of an acrylic emulsion binder, and 34g of pure water, and the mixture was blended for 16 hours by zirconia balls in a nylon pot to form a slurry.

The slurry was cast in gypsum mould prepared by using a bracket model. After completion of the moulding, the moulded body was removed from the gypsum mould and dried. The binder was removed and the moulded body sintered at 1,500°C for 2 hours under a circulation of oxygen. The sintered body obtained was subjected to hot isostatic pressing at 1,400°C and 1,500kgf/cm$^2$ (147.1MPa) for 30 minutes in argon gas. Then the treated body was charged in an electric furnace and heated to 1,000°C to obtain a translucent sintered body having the shape of a bracket. The surface of the sintered body obtained was polished to obtain a transparent zirconia orthodontic bracket.

The appearance of the obtained product is shown in Figure 1.

EXAMPLE 3

To 100g of a fine powder of the $TiO_2$-$Y_2O_3$-$ZrO_2$ system [$Y_2O_3/ZrO_2$ = 8/92 by mole, $TiO_2/(ZrO_2 + Y_2O_3$ = 10/90 by mole] were added 4g of an ethylene/vinyl acetate copolymer (UE633 supplied by Tosoh Corp.), 4g of an acrylic rubber (PBMA CB-1 supplied by Sanyo Chem. Ind.), 6g of paraffin wax, and 2g of dibutyl phthalate (plasticiser), and the mixture was kneaded at 140°C to prepare a material for injection moulding. This starting material was injected at 160°C into a mould having the shape of a bracket. Degreasing of the moulded body was accomplished by heating the moulded body to 800°C at a temperature-elevating rate of 5C°/hr, and sintering was accomplished by maintaining the moulded body at 1,700°C for 2 hours in an oxygen current. A transparent zirconia orthodontic bracket as shown in Figure 2 was obtained by polishing the sintered body.

**Claims**

1. A ceramic orthodontic bracket composed of a sintered body consisting essentially of 2 to 15 mol% of yttrium oxide ($Y_2O_3$), and 5 to 20 mol% of titanium dioxide ($TiO_2$), the balance being zirconia ($ZrO_2$).

2. A bracket as claimed in Claim 1, characterised in that it consists essentially of 6 to 8 mole% of yttrium oxide, and 10 to 15 mole% of titanium dioxide, the balance being zirconia.

3. A bracket as claimed in any preceding claim characterised by a grain size of about 15 to 25μm.

4. A process for making a ceramic orthodontic bracket, characterised by the steps of moulding finely divided particles of a mixture composed of 2 to 15 Mol% yttrium oxide ($Y_2O_3$), 5 to 20 mol% titanium dioxide ($TiO_2$) and the balance of zirconia ($ZrO_2$), and then sintering the moulded body at a temperature of at least 1,300°C in an oxygen-containing atmosphere.

5. A process as claimed in Claim 4 characterised in that the moulded body is sintered at a temperature in the range 1,600°C to 1,800°C.

6. A process as claimed in any of Claim 4 or Claim 5, characterised in that the sintered moulded body is subjected to hot isostatic pressing at a temperature in the range 1,400°C to 1,700°C in an inert gas atmosphere and then heated to a temperature in the range 800°C to 1,200°C in an oxygen-containing atmosphere.

## Patentansprüche

1. Orthodontischer Keramikträger aus einem Sinterkörper, bestehend im wesentlichen aus 2 bis 15 Mol % Yttriumoxid ($Y_2O_3$) und 5 bis 20 Mol % Titandioxid ($TiO_2$), Rest Zirkondioxid ($ZrO_2$).

2. Träger nach Anspruch 1, dadurch gekennzeichnet, daß er im wesentlichen aus 6 bis 8 Mol % Yttriumoxid und 10 bis 15 Mol % Titandioxid, Rest Zirkondioxid, besteht.

3. Träger nach einem der vorangehenden Ansprüche, gekennzeichnet durch eine Korngröße von etwa 15 bis 25 μm.

4. Verfahren zur Herstellung eines orthodontischen Keramikträgers, gekennzeichnet durch die folgenden Schritte: Formen von fein verteilten Partikeln eines Gemisches, das sich aus 2 bis 15 Mol % Yttriumoxid ($Y_2O_3$), 5 bis 20 Mol % Titandioxid ($TiO_2$), Rest Zirkondioxid ($ZrO_2$), zusammensetzt, und dann Sintern des Formkörpers bei einer Temperatur von mindestens 1300°C in einer Sauerstoff enthaltenden Atmosphäre.

5. Verfahren nach Anspruch 4, dadurch gekennzeichnet, daß der Formkörper bei einer Temperatur im Bereich von 1600°C bis 1800°C gesintert wird.

6. Verfahren nach einem der Ansprüche 4 oder 5, dadurch gekennzeichnet, daß der gesinterte Formkörper bei einer Temperatur in einem Bereich von 1400°C bis 1700°C in einer Inertgasatmosphäre heiß isostatisch gepreßt und dann in einer Sauerstoff enthaltenden Atmosphäre auf eine Temperatur in einem Bereich von 800°C bis 1200°C erhitzt wird.

## Revendications

1. Support orthodontique en céramique constitué par un corps fritté composé essentiellement de 2 à 15 % en moles d'oxyde d'yttrium ($Y_2O_3$), et de 5 à 20 % en moles de dioxyde de titane ($TiO_2$), le solde étant de la zircone ($ZrO_2$).

2. Support selon la revendication 1, caractérisé en ce qu'il se compose essentiellement de 6 à 8 % en moles d'oxyde d'yttrium et de 10 à 15 % en moles d'oxyde de titane, le solde étant de la zircone.

3. Support selon l'une quelconque des revendications précédentes caractérisé par une dimension des grains de 15 à 25, μm environ.

4. Procédé de fabrication d'un support orthodontique en céramique caractérisé par les opérations comprenant le moulage de particules finement divisées d'un mélange composé de 2 à 15 % en moles d'oxyde d'yttrium ($Y_2O_3$), de 5 à 20 % en moles de dioxyde de titane ($TiO_2$) et le solde étant de la zircone ($ZrO_2$) et ensuite le frittage du corps moulé à une température de 1.300°C au moins dans une atmosphère contenant de l'oxygène.

5. Procédé de la revendication 4, caractérisé en ce que le corps moulé est fritté à une température se trouvant dans la gamme de 1.600°C à 1.800°C.

6. Procédé selon l'une quelconque des revendications 4 ou 5, caractérisé en ce que le corps moulé fritté est soumis à une pression isostatique à chaud à une température se trouvant dans la gamme de 1.400°C à 1.700°C dans une atmosphère de gaz inerte et il est chauffé ensuite à une température se trouvant dans la gamme de 800°C à 1.200°C dans une atmosphère contenant de l'oxygène.

# Fig. 1

# Fig. 2